# EUROPÄISCHE PATENTSCHRIFT

(11) **EP 2 305 360 B1**
(45) Veröffentlichungstag und Bekanntmachung des Hinweises auf die Patenterteilung: **04.07.2012**
(21) Anmeldenummer: 10176236.7
(22) Anmeldetag: 10.09.2010
(51) Int. Cl.: B01D 35/18, F01M 5/00, F01M 11/03, G05D 23/02, F16H 57/04

(54) **Ölfiltermodul**
Oil filter module
Module de filtre à huile

(30) Priorität: 15.09.2009 DE 102009041525
(43) Veröffentlichungstag der Anmeldung: 06.04.2011
(73) Patentinhaber: MAHLE International GmbH, 70376 Stuttgart (DE)
(72) Erfinder: Bauer, Swen -Juri, 70374 Stuttgart (DE); Grüner, Andreas, 73110 Hattenhofen (DE); Schupp, Clemens, 70374 Stuttgart (DE)
(74) Vertreter: BRP Renaud & Partner

(56) Entgegenhaltungen:
- EP-A1- 0 922 839
- EP-A1- 1 810 764
- DE-A1- 19 943 294
- DE-C1- 19 844 264
- US-A1- 2006 108 435
- US-A1- 2008 093 066

## Beschreibung

Die vorliegende Erfindung betrifft ein Ölfiltermodul mit einer Filtereinrichtung und einem damit über ein Zwischenstück gekoppelten Wärmetauscher gemäß dem Oberbegriff des Anspruchs 1. Die Erfindung betrifft außerdem einen mit einem derartigen Ölfiltermodul ausgestatteten Verbrennungsmotor.

Aus der DE 199 43 294 A1 ist ein Ölfiltermodul mit einer Filtereinrichtung und einem Wärmetauscher bekannt. In der Filtereinrichtung ist dabei ein Kanal und zumindest ein federbeaufschlagtes Ventil vorgesehen, welches in den Kanal eingreift, welches mittels eines Sprengrings befestigt ist.

Aus der US 2008/0093066 A1 ist ein Wärmetauscher mit einem druckgesteuerten Bypassventil bekannt. Auch aus der EP 0 922 839 A1 ist wiederum ein Bypassventil zur Regelung einer Bypassverbindung bekannt.

Aus der US 2006/108435 A1 ist die Befestigung eines Ventils mittels eines Bajonettverschlusses.

Aus der EP 1 810 764 ist ein Verfahren zum Herstellen von Ventilgehäusen bekannt, bei dem die Ventilgehäuse zunächst aus einem extrudierten Stangenmaterial geschnitten und anschließend Aufnahmebohrungen bzw. Ventilbohrungen eingebracht werden.

Schließlich ist aus der DE 198 44 264 C1 ein selbstdichtendes Entlüftungsventil für Hubschraubertankanlagen bekannt. Dabei wird das eigentliche Ventil über eine Verschlusskappe von außen eingesetzt.

Gattungsgemäße Ölfiltermodule sind hinlänglich bekannt und besitzen üblicherweise ein sogenanntes Bypass-Ventil, welches besonders in der Kaltstartphase einen Ölstrom um den Wärmetauscher, das heißt um den Kühler, herum leitet, wodurch der Druckabfall geringer ist und somit die Lagerstellen schneller mit Öl versorgt werden. Bei bislang bekannten Ölfiltermodulen wurde dabei das zumindest eine Bypass-Ventil in seiner Einbauposition mit einem Zwischenstück verschraubt, was einen nicht zu unterschätzenden Montageaufwand sowie zusätzliche Befestigungselemente erforderte.

Eine andere Möglichkeit ein Ventil in dem Zwischenstück zu befestigen ist es einzupressen und dann zu verstemmen. Beide Möglichkeiten bedeuten einen erhöhten Arbeitsaufwand.

Die vorliegende Erfindung beschäftigt sich daher mit dem Problem, für ein Ölfiltermodul der gattungsgemäßen Art, eine verbesserte oder zumindest eine alternative Ausführungsform anzugeben, welche insbesondere leichter zu montieren ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, ein Bypass-Ventil eines Ölfiltermoduls nicht mehr wie bisher mit einem Zwischenstück des Ölfiltermoduls zu verschrauben, sondern zur Befestigung desselben am Zwischenstück einen Bajonettverschluss vorzusehen, welcher eine Montage bzw. Demontage des Bypass-Ventils deutlich vereinfacht. Mittels des erfindungsgemäßen Bajonett-Verschlusses kann dabei das Bypass-Ventil nicht nur schneller und einfacher montiert bzw. demontiert werden, wodurch auch Wartungskosten reduziert werden können, sondern es entfallen zudem auch zusätzliche Befestigungselemente, bspw. Schrauben, welche bisher zum Verschrauben des Bypass-Ventils mit dem Zwischenstück erforderlich waren. Vor allen Dingen vereinfacht sich aber ein Anbau des Bypass-Ventils am Zwischenstück des Ölfiltermodus erheblich.

Bei einer vorteilhaften Weiterbildung der erfindungsgemäßen Lösung weist das Bypass-Ventil ein Wachsdehnelement, eine Feder, einen Arbeitskolben und eine Abdeckung auf, wobei an der Abdeckung radiale Flügel angeordnet sind, die einen Teil des Bajonett-Verschlusses bilden. Den anderen Teil des Bajonett-Verschlusses bilden am Zwischenstück angeordnete Hinterschnittkonturen, wobei bereits die Aufzählung der einzelnen Bauteile deutlich macht, wie einfach und damit kostengünstig das erfindungsgemäße Bypass-Ventil aufgebaut ist. Das Wachsdehnelement ist ein temperaturabhängiges Dehnelement, welches zum Steuern des Bypass-Ventils entsprechend einer Öltemperatur dient. Die vorgesehene Feder dient zur Rückstellung, das heißt bspw. zum Öffnen des Bypass-Ventils. Der Bypass-Kanal wird durch Ausdehnung des Wachsdehnelementes geschlossen. Hierbei wird die Feder zusammengedruckt. Dabei ist das Bypass-Ventil generell so konstruiert, dass bei einem Ausfallen des sich temperaturabhängig dehnenden Wachsdehnelementes die Feder das Bypass-Ventil in eine Stellung überführt, in welchem das Öl nicht durch den Wärmetauscher geleitet und damit gekühlt wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: ein erfindungsgemäßes Ölfiltermodul,
- Fig. 2: eine Detaildarstellung des erfindungsgemäßen Ölfiltermoduls im Bereich eines Bajonett-Verschlusses des Bypass-Ventils,
- Fig. 3a-3c: eine Montage des erfindungsgemäßen Bypass-Ventils,
- Fig. 4a,b: eine Schnittdarstellung durch ein Zwischenstück des Ölfiltermodus bei geöffnetem und geschlossenem Bypass-Ventil,
- Fig. 5a,b: das Bypass-Ventil in geöffnetem und geschlossenem Zustand,
- Fig. 6: eine Kanalführung im Zwischenstück nach dem Stand der Technik,
- Fig. 7: eine erfindungsgemäß optimierte Kanalführung im Zwischenstück.

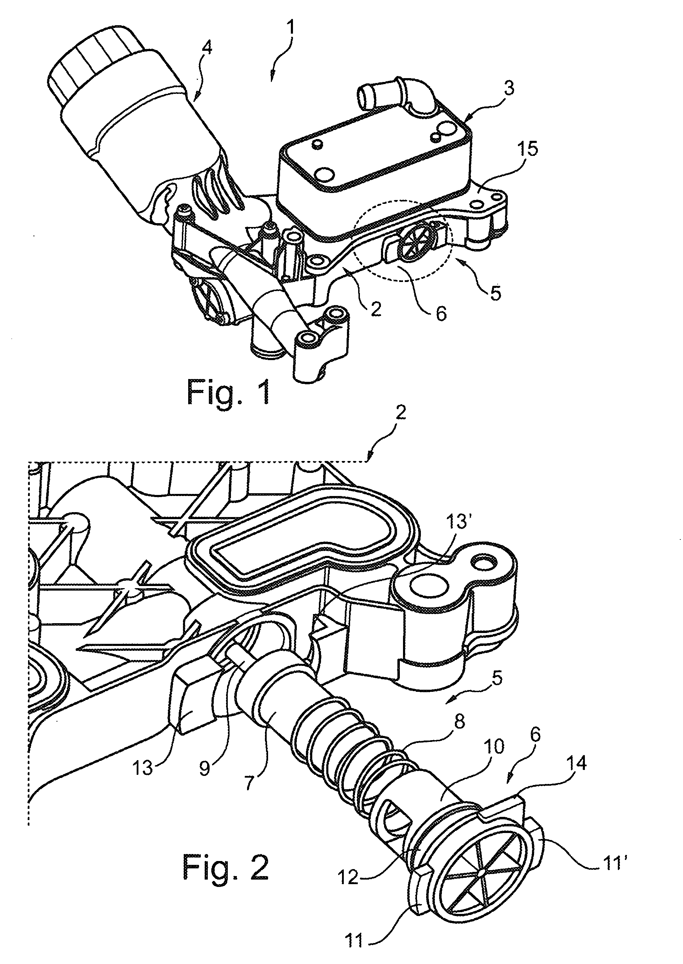

Entsprechend der Fig. 1, weist ein erfindungsgemäßes Ölfiltermodul 1 eine Filtereinrichtung 4 und einen damit über ein Zwischenstück 2 gekoppelten Wärmetauscher 3 auf. Der Wärmetauscher 3 ist dabei in bekannter Weise an einen Kühlkreislauf angeschlossen und dient in vordefinierten Betriebszuständen zur Kühlung des durch die Filtereinrichtung 4 fließenden Ölstroms. Diese vordefinierten Betriebszustände hängen insbesondere von der Temperatur des zu filternden Öls ab, sodass eine Kühlung des Öls bedarfsgerecht erfolgen kann. Ob das Öl nun gekühlt wird oder nicht, wird dabei von einem sogenannten Bypass-Ventil 5 (vgl. auch die Figuren 2-5) gesteuert, welches temperaturabhängig öffnet bzw. schließt. Im Zwischenstück 2 sind dabei zumindest Kanäle für das Öl bzw. die Kühlflüssigkeit integriert, wobei das Bypass-Ventil 5 in einen dieser Kanäle eingreift, vorzugsweise in einen Öl führenden Kanal, und erfindungsgemäß mittels eines Bajonett-Verschlusses 6 am Zwischenstück 2 befestigt ist. Im Vergleich zu aus dem Stand der Technik eingesetzten Bypass-Ventilen, welche beispielsweise am Zwischenstück 2 angeschraubt wurden, kann dadurch eine deutlich vereinfachte Montage des Bypass-Ventils 5 erreicht werden. Der Bajonettverschluss wird über die Grundplatte des Wärmetauschers zusätzlich gesichert, so dass er sich nicht versehentlich öffnen kann. Daher muss für die Demontage zuerst der Wärmetauscher abgeschraubt werden, um den Bajonettverschluss öffnen zu können. Zugleich entfallen bisher erforderliche Befestigungsmittel, wie bspw. Schrauben sowie ggf. erforderliche Befestigungswerkzeuge.

Bei der Montage des Bypass-Ventils 5 muss ein O-Ring 12, der am Bauteil des Bypassventils zur Abdichtung gegenüber der Umwelt angeordnet ist, in die Öffnung in das Zwischenstück 2 eingeschoben werden. Zusätzlich muss bei der Montage auch die Federkraft des Federelementes 8 des Bajonettverschlusses überwunden werden. Weil das Widerstandsmoment des Federelementes 8 nicht allein von Hand überwunden werden kann, ist ein Werkzeug erforderlich.

Betrachtet man insbesondere die Fig. 2, so kann man erkennen, dass das Bypass-Ventil 5 ein Wachsdehnelement 7, eine Feder 8, einen Arbeitskolben 9 und eine Abdeckung 10 umfasst. Die Abdeckung 10 kann dabei bspw. als kostengünstiges Kunststoffspritzgussteil ausgebildet sein und radial abstehende Flügel 11 und 11' aufweisen, die einen Teil des Bajonettverschlusses 6 bilden. Darüber hinaus muss an der Abdeckung 10 noch ein Dichtelement 12, insbesondere in der Art einer O-Ringdichtung, vorgesehen sein, um den Kanal, in welchen das Bajonett-Ventil 5 eingesetzt ist, endseitig abzudichten. Die Zwischenstücke 2 sind korrespondierend zu den an der Abdeckung 10 ausgebildeten Flügel 11 und 11' Hinterschnittkonturen 13 und 13' ausgebildet, welche zusammen mit dem Flügeln 11 und 11' den Bajonett-Verschluss bilden. Das Wachsdehnelement 7 dehnt sich temperaturabhängig und bewirkt dadurch bei einer Erwärmung ein Schließen des Bypass-Ventils 5, wogegen die Feder 8 bei einem sich zusammenziehenden Wachsdehnelement 7 ein Wiederöffnen des Bypass-Ventils 5 bewirkt, und somit den Bypasskanal freigibt.

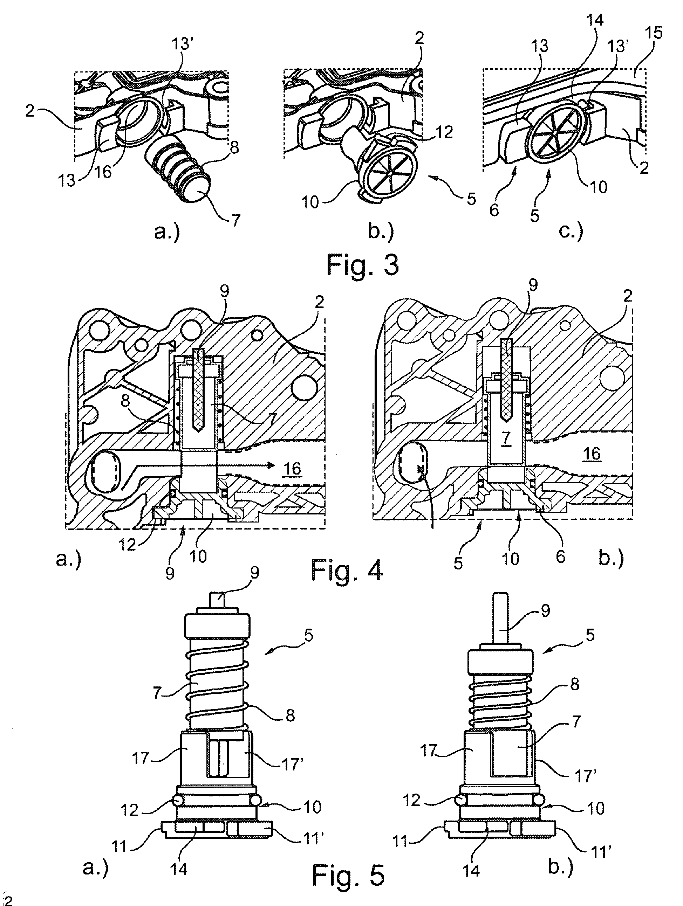

Gemäß den Figuren 3a bis 3c ist dabei ein Montagevorgang des Bypass-Ventils 5 im bzw. am Zwischenstück 2 gezeigt, wonach gemäß der Fig. 3a zunächst das Wachsdehnelement 7 zusammen mit dem Arbeitskolben 9 und der Feder 8 in den zugeordneten Kanal eingeschoben wird. Anschließend wird die Abdeckung 10 zunächst axial auf den Kanal zu bewegt und bei Erreichen seiner axialen Endlage entsprechend den dargestellten Pfeilen verdreht, wodurch die Flügel 11 und 11' in die zugehörigen Hinterschnittkonturen 13 und 13' am Zwischenstück 2 eingeführt und dadurch der Bajonett-Verschluss 6 verschlossen wird. Betrachtet man die Fig. 2 in Verbindung mit der Fig. 3c, so kann man an der Abdeckung 10 noch eine Sicherungskontur 14 erkennen, welche bei auf dem Zwischenstück 2 montiertem Wärmetauscher 3 in einer Grundplatte 15 des Wärmetauschers 3 anliegt und dadurch ein unbeabsichtigtes sich lösen bzw. herausdrehen des Bypass-Ventils 5 zuverlässig verhindert.

Betrachtet man die Figuren 4b und 5b, so kann man einen Zustand erkennen, in welchem das Bypass-Ventil 5 geschlossen ist, das heißt das Wachsdehnelement 7 in den entsprechenden Kanal 16 dicht eingeführt ist. In diesem Fall wird der gesamte Ölstrom durch den Wärmetauscher geleitet und dadurch gekühlt. Insbesondere aus der Fig. 5b kann man dabei erkennen, dass das Wachsdehnelement 7 eine Art Ventilkolben bildet, der von der Abdeckung 10 radial geführt und zugleich axial in seiner Bewegung begrenzt ist. Befindet sich das Bypass-Ventil 5, wie dies gemäß den Figuren 4a und 5a dargestellt ist, in einem geöffneten Zustand, so liegt der Ventilkolben, das heißt das Wachsdehnelement 7, außerhalb eines Strömungsquerschnittes des Kanals 16, wodurch die Strömung im Kanal 16 nicht beeinflusst wird. In diesem Fall ist der Strömungswiderstand im Kanal 16 deutlich geringer als in den zum Wärmetauscher 3 führenden Kanälen, sodass das Öl nicht durch den Wärmetauscher 3 sondern über den Kanal 16 an diesem vorbeigeleitet wird. Dieser Zustand ist bspw. während einer Kaltstartphase des Verbrennungsmotors wünschenswert, bei welcher eine zusätzliche Ölkühlung weder erforderlich noch gewünscht ist, um zu erreichen, dass der Verbrennungsmotor schneller seine Betriebstemperatur erreicht. Dadurch können insbesondere Kraftstoffverbrauch und Schadstoffemissionen gesenkt werden.

Betrachtet man die Figuren 5a und 5b genauer, so kann man erkennen, dass die Abdeckung 10 kreissegmentförmige Umfangselemente 17,17' aufweist, die die Führung des Wachsdehnelements 7 übernehmen und die bei montiertem Bypass-Ventil 5 in den Kanal 16 eingreifen. Sie sind jedoch derart angeordnet, dass sie einen Strömungsquerschnitt des Kanals 16 nicht oder zumindest nur marginal beeinträchtigen. Die Feder 8 stützt sich dabei einerseits an einem Kragen des Wachsdehnelementes 7 und andererseits an den beiden Umfangselementen 17 und 17' ab. In Fig. 5a wird die Feder in entspannter Stellung gezeigt, der Bypasskanal ist offen. In Fig. 5b hingegen ist die Feder angespannt und der Bypasskanal geschlossen.

Mit dem erfindungsgemäßen Bajonett-Verschluss 6, kann das Bypass-Ventil 5 einfach und schnell am Zwischenstück 2 montiert werden, wodurch einerseits Montagekosten gespart und andererseits insbesondere zusätzliche Befestigungsmittel, wie bspw. Schrauben, vermieden werden können. Durch eine entsprechend angeordnete Sicherungskontur 14 kann darüber hinaus zuverlässig gewährleistet werden, dass sich das Bypass-Ventil 5 nicht unbeabsichtigt aus dem Kanal 16 herauslöst und dadurch eine Ölleckage auslösen kann.

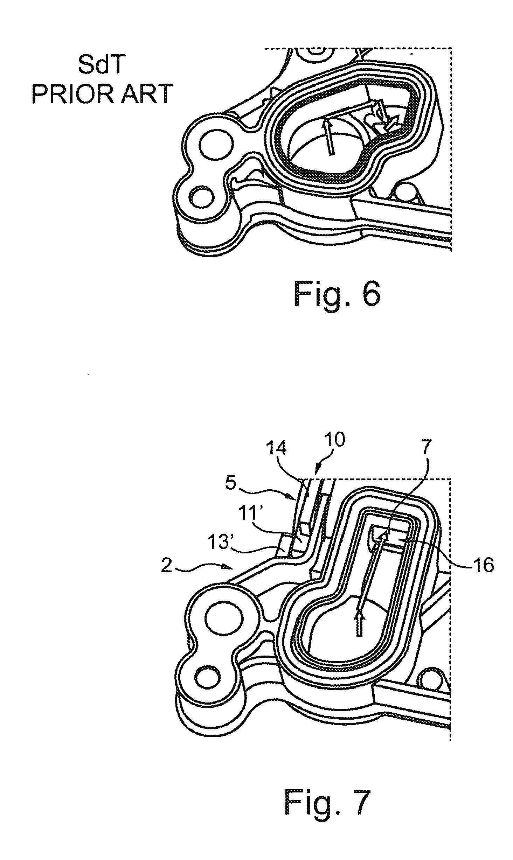

Betrachtet man noch die Figuren 6 und 7, so kann man erkennen, dass in dem erfindungsgemäß neu gestalteten Zwischenstück 2, welches gemäß der Fig. 7 dargestellt ist, eine Kanalführung deutlich vereinfacht ist im Vergleich zu einem bisherigen Zwischenstück, welches gemäß der Fig. 6 dargestellt ist, sodass mit dem erfindungsgemäßen Zwischenstück 2 insbesondere ein reduzierter Strömungswiderstand erreicht werden kann. Durch die vergleichsweise komplizierte Kanalführung und die damit hohen Strömungswiderstände bzw. Druckverluste, war beim bisherigen Zwischenstück eine vergleichsweise hohe Pumpenleistung und damit vergleichsweise viel Energie zur Ölförderung erforderlich. Beim neuen, erfindungsgemäßen Zwischenstück 2, wurde der Strömungswiderstand deutlich reduziert, was auch eine Reduzierung der Druckverluste zur Folge hat, sodass zur Förderung des Ölstroms deutlich weniger Energie benötigt wird.

## Patentansprüche

1. Ölfiltermodul (1) mit einer Filtereinrichtung (4) und einem damit über ein Zwischenstück (2) gekoppelten Wärmetauscher (3),
**dadurch gekennzeichnet,**
- **dass** im Zwischenstück (2) zumindest einen Kanal (16) für Öl und zumindest ein federbeaufschlagtes Bypassventil (5) vorgesehen sind, das in den Kanal (16) eingreift und mittels eines Bajonettverschlusses (6) am Zwischenstück (2) befestigt ist,
- **dass** das Bypassventil (5) ein Wachsdehnelement (7), eine Feder (8), einen Arbeitskolben (9) und eine Abdeckung (10) aufweist, wobei an der Abdeckung (10) radiale Flügel (11,11') angeordnet sind, die einen Teil des Bajonettverschlusses (6) bilden,
- **dass** das Wachsdehnelement (7) einen Ventilkolben bildet, der von der Abdeckung (10) radial geführt und axial begrenzt ist und der bei geöffnetem Bypassventil (5) außerhalb eines Strömungsquerschnittes des zugehörigen Kanals (16) liegt.

2. Ölfiltermodul nach Anspruch 1
**dadurch gekennzeichnet,**
**dass** der Bajonettverschluss (6) als Verschluss für den Kanal (16) ausgebildet ist, in welchen das zugehörige Bypassventil (5) eingreift.

3. Ölfiltermodul nach Anspruch 1 oder 2,
**dadurch gekennzeichnet,**
**dass** die Abdeckung (10) kreissegmentförmige Umfangselemente (17,17') aufweist, die eine Radialführung für den Ventilkolben bilden und die in den Kanal (16) eingreifen.

4. Ölfiltermodul nach einem der Ansprüche 1 bis 3,
**dadurch gekennzeichnet,**
**dass** die im Zwischenstück (2) angeordneten Kanäle einen reduzierten Strömungswiderstand aufweisen.

5. Verbrennungsmotor mit einem Ölfiltermodul (1) nach einem der Ansprüche 1 bis 4.

## Claims

1. An oil filter module (1) comprising a filter device (4) and a heat exchanger (3) coupled thereto via an intermediate piece (2),
**characterized in**
- **that** in the intermediate piece (2), at least one channel (16) for oil and at least one springloaded bypass valve (5) are provided, wherein said bypass valve engages in the channel (16) and is fastened to the intermediate piece (2) by means of a bayonet coupling (6),
- **that** the bypass valve (5) has a wax element (7), a spring (8), a working piston (9) and a cover (10), wherein radial wings (11, 11') are arranged on the cover (10) which form a portion of the bayonet coupling (6),
- **that** the wax element (7) forms a valve piston which is radially guided and axially bordered by the cover (10) and which lies outside of a flow cross-section of the associated channel (16) when the bypass valve (5) is open.

2. The oil filter module according to claim 1, **characterized in that** the bayonet coupling (6) is formed as a closure element for the channel (16) in which the associated bypass valve (5) engages.

3. The oil filter module according to claim 1 or claim 2, **characterized in that** the cover (10) has circular-segment-shaped circumferential elements (17, 17') which form a radial guide for the valve piston and engage in the channel (16).

4. The oil filter module according to any one of the claims 1 to 3, **characterized in that** the channels arranged in the intermediate piece (2) have a reduced flow resistance.

5. An internal combustion engine comprising an oil filter module (1) according to any one of the claims 1 to 4.

## Revendications

1. Module de filtre à huile (1) comportant un dispositif de filtrage (4) et un échangeur thermique (3) couplé à celui-ci au moyen d'une pièce intercalaire (2), **caractérisé en ce que**
- dans la pièce intercalaire (2) au moins un canal (16) pour l'huile et au moins une soupape de dérivation (5) sollicitée par ressort sont prévus, laquelle soupape s'engage dans le canal (16) et est fixée sur la pièce intermédiaire (2) au moyen d'une fermeture à baïonnette (6),
- la soupape de dérivation (5) présente un élément dilatable en cire (7), un ressort (8), un piston de travail (9) et un couvercle (10), dans lequel des ailes radiales (11, 11') sont disposées sur le couvercle (10), lesquelles forment une partie de la fermeture à baïonnette (6),
- l'élément dilatable en cire (7) forme un piston de soupape, qui est guidé radialement par le couvercle (10) et est limité axialement et qui vient reposer à l'extérieur d'une section transversale d'écoulement du canal afférent (16) quand la soupape de dérivation (5) est ouverte.

2. Module de filtre à huile selon la revendication 1, **caractérisé en ce que** la fermeture à baïonnette (6) est réalisée comme une fermeture pour le canal (16), dans lequel la soupape de dérivation afférente (5) s'engage.

3. Module de filtre à huile selon la revendication 1 ou 2, **caractérisé en ce que** le couvercle (10) présente des éléments circonférentiels (17, 17') en forme de segment circulaire, qui forment un guidage radial pour le piston de soupape et s'engagent dans le canal (16).

4. Module de filtre à huile selon une des revendications 1 à 3, **caractérisé en ce que** les canaux disposés dans la pièce intercalaire (2) présentent une résistance à l'écoulement réduite.

5. Moteur à combustion interne comportant un module de filtre à huile (1) selon une des revendications 1 à 4.
